# EUROPEAN PATENT SPECIFICATION

(11) **EP 4 668 797 B1**
(45) Date of publication and mention of the grant of the patent: **23.09.2026**
(21) Application number: 24183746.7
(22) Date of filing: 21.06.2024
(51) Int. Cl.: H04W 4/38, H04W 4/021

(54) **METHOD FOR USING A REQUESTING ENTITY FOR REQUESTING AND/OR INITIATING A WIRELESS SENSING SERVICE OPERATION PROVIDED BY A MOBILE COMMUNICATION NETWORK, USER EQUIPMENT, SYSTEM OR TELECOMMUNICATIONS NETWORK, PROGRAM AND COMPUTER-READABLE MEDIUM**
VERFAHREN ZUR VERWENDUNG EINER ABFRAGEEINHEIT ZUR ABFRAGE UND/ODER EINLEITUNG EINES FUNKERFASSUNGSDIENSTES
PROCÉDÉ D'UTILISATION D'UNE ENTITÉ DEMANDEUSE POUR DEMANDER ET/OU LANCER UN SERVICE DE DÉTECTION SANS FIL

(43) Date of publication of application: 24.12.2025
(73) Proprietor: Deutsche Telekom AG, 53113 Bonn (DE)
(72) Inventor: ALEKSIEV, Vasil, 1220 Wien (AT)
(74) Representative: Schwöbel, Thilo K.

(56) References cited:
- EP-A1- 4 369 750
- WO-A1-2024/088584
- WO-A1-2024/088606
- WO-A1-2024/114930
- "3rd Generation Partnership Project; Technical Specification Group Services and System Aspects; Service Enabler Architecture Layer for Verticals (SEAL); Functional architecture and information flows; (Release 19)", no. V19.1.0, 2 April 2024 (2024-04-02), pages 1 - 299, XP052598196, Retrieved from the Internet <URL:https://ftp.3gpp.org/Specs/archive/23_series/23.434/23434-j10.zip 23434-j10.docx> [retrieved on 20240402]

## Description

### BACKGROUND

The present invention relates a method for using a requesting entity for requesting and/or initiating a wireless sensing service operation provided by a mobile communication network, the mobile communication network comprising or having a core network, wherein a radio access network of, or being assigned to, the mobile communication network and/or a further radio access network of, or being assigned to, a further mobile communication network, comprises a sensing function or a sensing capability enabler server.

Additionally, the present invention relates to a user equipment for being used as a requesting entity for requesting and/or initiating a wireless sensing service operation provided by a mobile communication network that comprises or has a core network and with a radio access network being assigned to the mobile communication network comprising sensing function.

Furthermore, the present invention relates to a system or to a telecommunications networks for using a requesting entity for requesting and/or initiating a wireless sensing service operation provided by a mobile communication network, the mobile communication network comprising or having a core network,
wherein a radio access network of, or being assigned to, the mobile communication network and/or a further radio access network of, or being assigned to, a further mobile communication network, comprises a sensing function.

Furthermore, the present invention relates to a program and to a computer-readable medium for using a user equipment in the framework of service enabler architecture layer for verticals according to the inventive method.

In conventionally known telecommunications networks, it is known to use a user equipment with a telecommunications network such that, subject to the operator's policy (i.e. the network operator of the telecommunications network or mobile communication network), the 5G network shall be able to provide secure means to report sensing result to a trusted third-party requesting information about a target object when specific requested conditions are met; such conditions could, e.g., be the target object distance from a restricted area border and/or entering a restricted area.

However, in presently known mobile communication networks, it is not clear how the sensing function would know about such a sensing restricted (or monitored) area (or a plurality of such sensing restricted (or monitored) areas). Patent application publications WO 2024/114930 A1, WO 2024/088584 A1 and EP 4369750 A1 disclose systems and methods for achieving wireless sensing in mobile communication networks.

### SUMMARY

An object of the present invention is to provide a technically simple, effective and cost-effective solution for using a requesting entity for requesting and/or initiating a wireless sensing service operation provided by a mobile communication network, wherein it is especially possible to indicate a monitored (or restricted) area in a manner such that - in case of a sensing event having been detected by the sensing functionality - a sensing monitoring event message is generated and able to be transmitted to a requesting entity. A further object of the present invention is to provide a corresponding user equipment, a corresponding system or telecommunications network, and a corresponding program and computer-readable medium.

The object of the present invention is achieved by a method according to claim 1.

According to the present invention, it is advantageously possible to provide a solution to a situation such as, e.g., monitoring (or guarding) a specific area, wherein a notification is generated by an entity of the sensing functionality (and received by a requesting entity) if a specific object, e.g., enters (or leaves or moves within) a specific area. For example, if a person, cow, or other obstacle (e.g. rocks falling from a cliff on the railroad, intruder detection at home) is detected on a railroad - immediate notification should be sent towards the requesting third party or the user equipment (i.e. the requesting entity) that has set, or defined, the restricted area (in one of the cases mentioned, e.g. the railroad operator responsible for the corresponding area). In this case it is not needed to continuously send sensing results towards the requesting third party (requesting entity), but only if a specific event has occurred, e.g., a specific object in the restricted area has been detected to have moved (e.g. a rock fallen), or entered or left the (defined) restricted (or monitored) area. It is thereby advantageously possible, according to the present invention, to safe network resources and energy as the number of sensing-related messages for the task of monitoring the restricted or monitored area is able to be reduced, and, especially, focused only on such situations where a defined monitoring event or a defined sensing event (or a monitoring or sensing event falling in (or being comprised by) a class of such sensing or monitoring events) is detected or sensed.

According to the present invention, the sensing capability enabler client and/or the vertical application layer server is able to be used for requesting a sensing service with asking a notification about objects entering or leaving (or moving within) a defined restricted (or monitored) area.

Especially according to the present invention, it is advantageously possible that an application programming interface, API, is used (especially in order to define the sensing and/or monitoring task) where specific parameters are given and based on which the sensing function, SF, (or sensing capability enabler server, SCE server) sends a notification in case that a sensing (or monitoring) event has occurred, e.g., a specific object with specific size or bigger is available (i.e. present where it has previously been absent) in the target sensing location area and/or entering or leaving the target sensing (location) area.

It is especially advantageous, according to the present invention, that - based on the available resolution and the object size and shape - the object or living being might even be classified, e.g. as an animal (typically either substantially larger or bigger or substantially smaller than a typical human being), a rock, a human.

Furthermore, it is advantageously possible that, in case of a deployed positioning service and in case that the specific object has an attached user equipment even the object can be identified based on its user equipment identifier.

According to the present invention, it is especially possible to support and provide a wireless sensing service operation provided by a mobile communication network. The mobile communication network (or telecommunications network) typically comprises or has a core network and a radio access network (of or being assigned to the mobile communication network) and/or a further radio access network (of or being assigned to a further mobile communication network) comprises a sensing function or a sensing capability enabler server (wherein also the core network might comprise at least part of the sensing function or sensing function network nodes or functionalities).

Hence, the requesting entity - i.e. the service capability enabler client and/or the vertical application layer server - is receiving a notification in case that a sensing event has been detected; in case that the (detected) object occurs to also having an identifier info (e.g. a user equipment identifier or other identifiers from a database related to the user equipment).

Regarding the functionality of the present invention - especially realized as an application programming interface -, different architectures are able to be used: One possibility is directly the 5G/6G core network sensing function and/or integrated sensing and communication SF/ISAC to be contacted.

This advantageously provides the possibility, according to the present invention, to provide different procedures, service flows and APIs to provide a wireless sensing service operation, especially an area-related notification functionality, where sensing monitoring event messages are generated, transmitted and received only (or, at least, mainly) in case that at least one kind of sensing event has occurred at the specific location or within the specific geographical area.

According to the present invention, the sensing monitoring event corresponds to an object or to a living being that is detected - with respect to the specific location or specific geographical area - as either being present, especially where it has previously been absent or detected to be absent, or absent, especially where it has previously been present or detected to be present.

It is thereby advantageously possible to realize and implement the inventive method in a comparatively simple and efficient manner.

Furthermore, it is advantageously possible and preferred according to the present invention that the requesting entity is or corresponds to a sensing capability enabler client, and wherein the sensing capability enabler client sends the sensing monitoring registration request message via a sensing capability enabler interface to the sensing capability enabler server,
wherein especially both the sensing monitoring registration response message and the sensing monitoring event message is received, by the sensing capability enabler client being the requesting entity, from the sensing capability enabler server via the sensing capability enabler interface.

It is thereby advantageously possible to efficiently realize and implement the inventive method in a comparatively simple and flexible manner.

Furthermore, it is advantageously possible and preferred according to the present invention that the requesting entity is or corresponds to a vertical application layer server, and wherein the vertical application layer server sends the sensing monitoring registration request message via a sensing capability enabler interface to the sensing capability enabler server,
wherein especially both the sensing monitoring registration response message and the sensing monitoring event message is received, by the vertical application layer server being the requesting entity, from the sensing capability enabler server via the sensing capability enabler interface.

It is thereby advantageously possible to realize and implement the inventive method in a comparatively simple and efficient manner.

Furthermore, it is advantageously possible and preferred according to the present invention that a service enabler architecture layer for verticals, SEAL, is used in a vertical application layer implementation, VAL implementation, for requesting and/or initiating the wireless sensing service operation provided by the mobile communication network to provide communication services, to the requesting entity being a user equipment, using a vertical application layer server via the telecommunications network, especially for supporting and providing a location-related notification functionality and/or for providing location-related and event-related notification data, wherein the user equipment is a vertical application layer user equipment comprising a vertical application layer client, VAL client, and a sensing capability enabler client,
wherein the service enabler architecture layer for verticals comprises a sensing capability enabler server that is able to realize an area-related notification functionality by means of acting as a requesting entity, especially as an application function.

It is thereby advantageously possible to realize and implement the inventive method in a comparatively simple and efficient manner.

Furthermore, according to the present invention that the sensing capability enabler server is acting as a location monitoring requesting entity, wherein the location monitoring requesting entity sends the location monitoring registration request to the location management function or the location management server, wherein the location monitoring requesting entity receives a monitoring confirmation, wherein the sensing capability enabler server is acting as a sensing monitoring requesting entity and sends the sensing monitoring registration request to the sensing function, wherein the sensing monitoring requesting entity receives a sensing monitoring confirmation, wherein the sensing capability enabler server receives sensing monitoring event message and location monitoring event message and then combines both results.

It is thereby advantageously possible to realize and implement the inventive method in a comparatively simple and efficient manner.

Furthermore, the present invention relates to a sensing capability enabler client or vertical application layer server according to claim 6.

Furthermore, the present invention relates to a system or to a mobile communication network according to claim 7.

Additionally, the present invention relates to a program comprising a computer readable program code, as further defined in claim 8.

Additionally, the present invention relates to a computer-readable medium according to claim 9.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

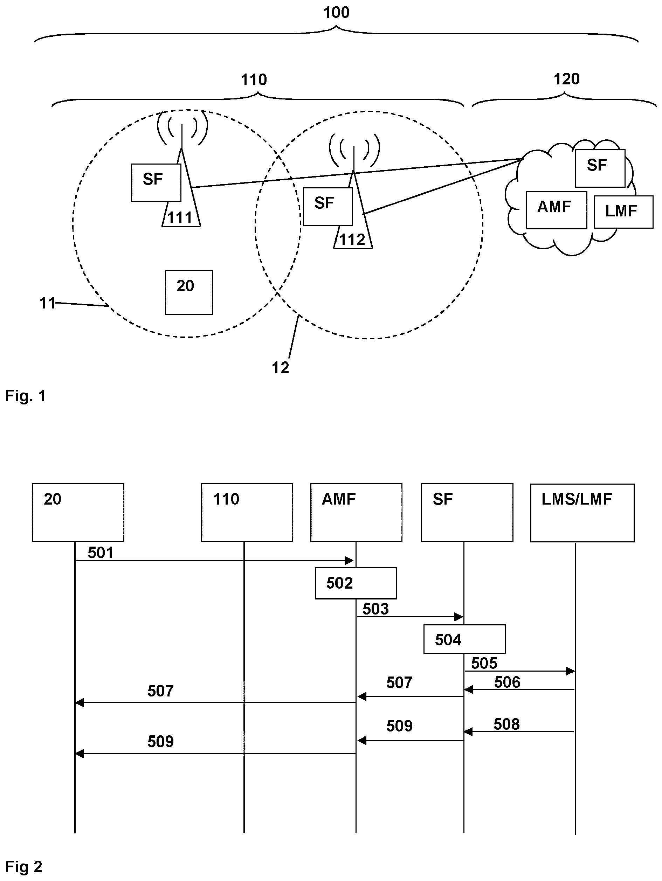

Figure 1 schematically illustrates a telecommunications network or mobile communication network, comprising an access network and a core network, a user equipment being served by the mobile communication network, wherein an integrated sensing and communication service is able to be provided by the mobile communication network, especially by means of at least one sensing function and/or by means of a plurality of sensing functions and wherein the core network comprises a plurality of network functions or services, especially an access and mobility management function.
Figure 2, which does not fall within the scope of the claims, schematically illustrates a communication diagram between the user equipment and the network nodes and entities involved in providing the integrated sensing and communication service of the mobile communication network, wherein the access and mobility management function is involved in deciding which one of a plurality of sensing function entities or functionalities of the mobile communication network is used.

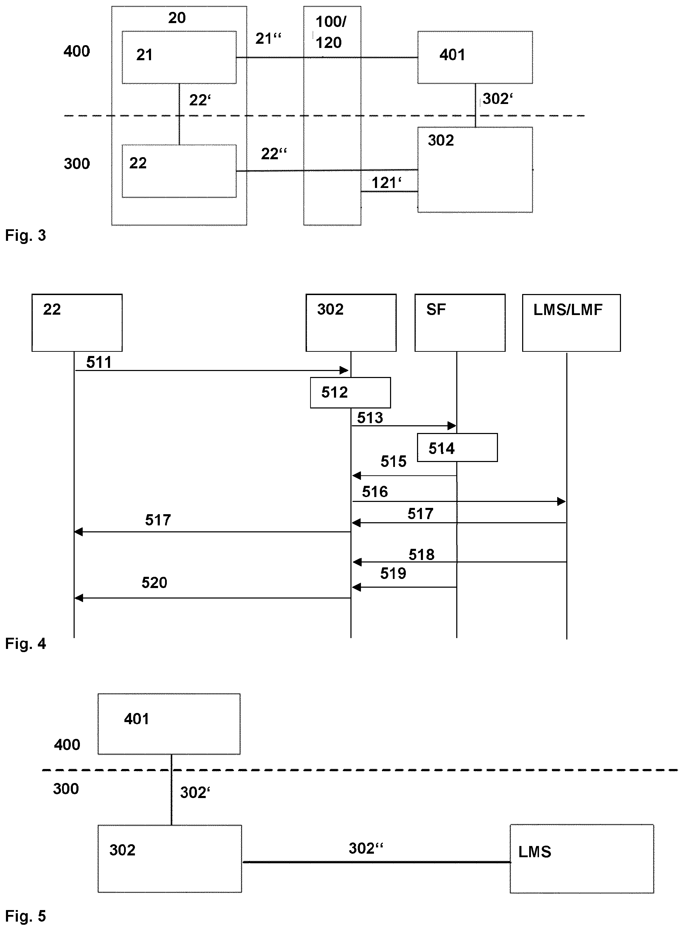

Figure 3 schematically illustrates the user equipment and the telecommunications network according to service enabler architecture layer for verticals, SEAL, that is used in a vertical application layer (VAL) implementation for providing the communication services according to the present invention to the user equipment; according to such an architecture, an application function or application server, especially with a network exposure function is involved in deciding which one of the plurality of sensing function entities or functionalities of the mobile communication network is used; additionally, Figure 5 schematically illustrates how the the sensing capability enabler server is linked to the location management server and to the vertical application layer server.
Figure 4 schematically illustrates a representation of a communication diagram between the user equipment, the vertical application layer server and the location management server (or the sensing capability enabler server) of an exemplary implementation of the service enabler architecture layer for verticals for supporting and providing the requested wireless sensing service operation, especially the area-related notification functionality according to the present invention.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a telecommunications network 100 (typically a mobile communication network 100), comprising an access network 110 and a core network 120, and a user equipment 20 is schematically shown.
A user equipment 20 is served by the mobile communication network 100, wherein an integrated sensing and communication service is able to be provided by the mobile communication network 100 - at least in certain geographical areas covered by the mobile communication network 100. In such geographical areas where integrated sensing and communication services are able to be provided, the mobile communication network 100 typically comprises a sensing function SF (but preferably a plurality of sensing functions SF). The sensing functions SF are typically located in the radio access network 110 (i.e. typically collocated with network nodes of the radio access network 110 or near such network nodes) and/or in the core network 120 (i.e. typically collocated with network nodes of the core network 120 or near such network nodes), i.e. sensing function SF functionalities are able to be located solely in or at the radio access network 110 or in or at the core network 120 or in or at both the radio access network 110 and the core network 120; for example, it could be the case that some policies are only available in the core network (e.g. for specific exposure prevention and/or for combining other results from other base station entities or radio access network nodes or from other sources). Especially in the radio access network 110, there could be some modification of the raw data received as measurements, called sensing data; these data are able to be sent towards the core network 120 for further calculations. The core network 120 typically comprises a plurality of network functions or services, especially an access and mobility management function AMF. In the context of the present invention, especially the network functions or services according to 5G terminology are used; however, there might be network functions or services in 6G that provide a corresponding or similar functionality and/or responsibility, albeit named differently.

The telecommunications network 100 is especially realized as mobile (cellular) communication network 100. The telecommunications network 100, especially its core network 120, typically comprises a number of network functions or services that are, however and for the sake of simplification, (and except the access and mobility management function) not explicitly and separately indicated, in Figure 1, by means of reference signs. The access network 110 of the telecommunications network 100 exemplarily comprises a plurality of radio cells 11, 12. In the exemplary situation or scenario shown in Figure 1, a first base station entity 111 generates or is associated with or spans the first radio cell 11, and a second base station entity 112 generates or is associated with or spans the second radio cell 12. In the exemplary situation shown in Figure 1, the user equipment 20 (if connected to or with the mobile communication network 100) is connected, via a radio interface or air interface, to the first base station entity 111 of the access network 110 of the mobile communication network 100.

According to the present invention, the user equipment 20 is typically, but not necessarily, mobile - i.e. able to move - with respect to the - typically, but not necessarily, static - radio cells 11, 12 or corresponding base station entities 111, 112 of the access network 110.
Especially, the user equipment 20 might comprise an application (not specifically depicted in Figure 1) as part of the user equipment 20; the application typically runs on the user equipment 20, i.e. the user equipment 20 typically runs or executes an operating system (such as a mobile (devices) operating system, e.g., android, iOS, iPadOS, etc.), and the application is running on the operating system; alternatively, the application might also be a lower level application not running on or as part of the operating system but as part of, e.g., the subscriber identity module of the user equipment 20.

In Figure 2, a communication diagram between the user equipment 20 and the network nodes and entities involved in providing the integrated sensing and communication service, especially the area-related notification functionality, of the mobile communication network 100 is schematically shown. The access and mobility management function AMF is involved in deciding which one of the plurality of sensing function entities or functionalities SF of the mobile communication network 100 is used.

Thus, it is thereby advantageously possible that the user equipment 20 has a mechanism to request the area-related notification functionality and corresponding sensing (integrated sensing and communication) service and provide the information about the needed parameters of that service. Figure 2 shows an embodiment where the user equipment 20 - in order to realize such a communication to request a sensing (integrated sensing and communication) service and provide the information about the needed parameters of that service - communicates directly via the network layer (i.e. the sensing service is requested via the 5G core network 120); this also involves the possibility for a mechanism to negotiate the sensing service quality, the definition of the area to be monitored, etc..

In a first processing step 501, the user equipment 20 sends (especially using UL NAS TRANSPORT - i.e. an existing container message) a subscription request, i.e. a request regarding a sensing monitoring function or regarding a corresponding integrated sensing and communication service (in the context of the present invention called sensing monitoring registration request message), towards the access and mobility management function AMF. It passes via the radio access network 110 (i.e. using the air interface of the user equipment 20; however, typically, the radio access network 110 is not involved (besides transparently forwarding) in this communication) where the interface towards the access and mobility management function AMF is able to be service based. The sensing monitoring registration request message preferably and especially contains one or a plurality out of the following: a target sensing service location area, the object size above which notification for presence is expected in the target area and/or timer or start time / end time for which the subscription is valid.

Alternatively (or cumulatively) to the user equipment 20 sending the sensing monitoring registration request message, i.e. acting as the requesting entity according to the present invention, it is possible and preferred according to the present invention - however, not represented in Figure 2 - that an application function, AF, acts as the requesting entity, and sends the subscription request, i.e. the sensing monitoring registration request message via a network exposure function, NEF, of the mobile communication network 100 (ultimately to be sent towards the respective sensing function, SF, - i.e. especially a sensing function as a network function or service (part) of the mobile communication network 100, typically a 5G core network).

In a second processing step 502, the access and mobility management function AMF selects a corresponding sensing function SF, i.e. it makes a sensing function SF (or ISACF) selection based on the parameters sent in the sensing monitoring registration request message from the user equipment 20 (i.e. in the SF request) - or from the application function AF. The access and mobility management function AMF may be configured to route requests coming from specific geographical locations (based on the user equipment location) to specific sensing functions, SF, (or integrated sensing and communication functions, ISACF). In order to select the correct sensing function SF, the access and mobility management function AMF might be configured to retrieve from the unified data management, UDM, sensing function (or integrated sensing and communication function) subscriber data of the user equipment 20 (SF (or ISACF) subscriber data), typically based on the user equipment identity and/or category. Especially, the access and mobility management function AMF may be configured with a mapping table of user equipment identity and SF (or ISACF) address and/or of the user equipment location.

In a third processing step 503, the access and mobility management function AMF especially uses a service-based interface (of the sensing function SF) and requests (especially by means of an additional sensing monitoring registration request message, i.e. related to the sensing monitoring registration request message of the user equipment 20 but typically not (at least not necessarily) identical thereto) service operation towards the sensing function SF (or ISACF). Such an additional sensing monitoring registration request message especially includes an SF correlation identifier, the access and mobility management function identity, the serving cell identity, the user equipment sensing capability, accuracy of detected objects positioning estimate, accuracy of velocity estimate of detected objects, resolution, latency, sensing refresh rate or other similar parameters.

In a fourth processing step 504, the sensing function SF (or integrated sensing and communication function ISACF) activates the sensing function with sensing transmitter and receiver in the target sensing service location area. According to TS22.137 sensing transmitter is an entity that sends out the sensing signal which the sensing service will use in its operation. A Sensing transmitter is part of a RAN node or a UE. A Sensing transmitter can be located in the same or different entity as the Sensing receiver. Sensing receiver is an entity that receives the sensing signal which the sensing service will use in its operation. A sensing receiver is part of a RAN node or a UE. A Sensing receiver can be located in the same or different entity as the Sensing transmitter.

In a fifth processing step 505, the sensing function SF sends subscription request towards LMF and GMLC asking for receiving the user equipment identifiers with their exact location in the same target sensing service location area. Hence, the sensing function acts as a location monitoring requesting entity, and the above mentioned subscription request (of the sensing function) corresponds to a location monitoring registration request message, sent to the location management function, LMF, or to the location management server LMS.
In accordance with the fifth processing step 505, the sensing function SF gets - in a sixth processing step 506 - a subscription response from the LMF and/or LMS; in the context of the present invention, this subscription response is also called the sensing monitoring confirmation (message).

In a seventh processing step 507, the sensing function SF sends a subscription reply (i.e., in the context of the present invention, the sensing monitoring registration response message) to the requesting entity, i.e. the user equipment 20 and/or the application function AF with positive or negative response on the success of the subscription.
Hence, in the seventh processing step 507, the sensing function SF responds - by means of the sensing monitoring registration response message - to the user equipment 20 (or, alternatively, the application function), i.e. the user equipment 20 (or, alternatively, the application function) receives the sensing monitoring registration response message, (especially by means or via the access and mobility management function, AMF), i.e. a confirmation whether the requested service is able to be provided (or not).

By means of the seventh processing step 507, the preparatory steps for the registration of the sensing monitoring registration (with the corresponding request message (sent by the requesting entity, especially the user equipment 20 and/or the application function) and the corresponding response message (received by the requesting entity)) are completed, and the actual monitoring is able to be applied (i.e. the respective sensing (or monitoring) service provided by the telecommunications network 100; this is realized in an eighth processing step 508 and/or a ninth processing step 509: If there is object/s present in the area, the sensing function SF prepares corresponding notifications (i.e. the sensing monitoring event messages - cf. the ninth processing step 519 in Figure 2) towards the requesting entities, i.e. the user equipment 20 (via the access and mobility management function access and mobility management function as shown in Figure 2), or the application function (via the network exposure function). Such sensing monitoring event messages especially comprise object coordinates and size (of the detected object or living being). Based on the available resolution and object size and shape it might even be possible that the detected object is able to be classified as, for example, a rock, an animal, a human being or the like. It can be determined in the subscription request to send notification only when human is detected to be sent (for example if there is a cat left at home).
In the eighth processing step 508 - the location management function LMF and/or the location management server LMS send(s) a notification (location monitoring event message) with a location information of corresponding (detected) user equipments, i.e. especially in case that such user equipments are present in the monitored area.
Especially, the sensing function SF checks (after having received the location monitoring event message) if the coordinates of the detected object match the received user equipment identifiers coordinates; if there is a match and there is user consent present, the sensing function SF sends the information about the detected objects and user equipment identifiers towards the requesting entity, i.e. the user equipment (via access and mobility management function AMF) or the application function (via network exposure function) in a notification message (i.e. the sensing monitoring event messages of the ninth processing step 509). If there is not a match, or a lack of consent, the sensing function SF sends only the object coordinates as notification towards the respective requesting entity, i.e. towards the user equipment 20 (via access and mobility management function AMF) or towards the application function (via network exposure function).

Figure 3 schematically illustrates the user equipment 20 and the telecommunications network (or mobile communication network) 100 (or core network 120 thereof) according to service enabler architecture layer for verticals, SEAL, that is used in a vertical application layer (VAL) implementation for providing the communication services according to the present invention to the user equipment 20; according to such an architecture, an application function or application server, especially with a network exposure function is involved in deciding which one of the plurality of sensing function entities or functionalities of the mobile communication network is used.

According to such an implementation of the present invention, the user equipment 20 is a vertical application layer user equipment 20, especially comprising a vertical application layer client (VAL client) 21 and a sensing capability enabler client 22. The service enabler architecture layer for verticals 300 comprises the sensing capability enabler server 302. Between the vertical application layer (VAL) client 21 (of the user equipment 20) and the location management client 22 (of the user equipment 20), an interface or reference point 22' is realized, especially of the type SC-C (sensing capability enabler-client).
Furthermore, the vertical application layer 400 comprises, besides the vertical application layer client 21 (of the user equipment 20), an vertical application layer server 401; between these entities, an interface or reference point 21" is realized, especially of the type VAL-UU; furthermore, between the sensing capability enabler client 22 and the sensing capability enabler server 302, an interface or reference point 22" is realized, especially of the type SC-UU (sensing capability enabler-UU).
The sensing capability enabler server 302, acting as application function, AF, especially communicates with the telecommunications network 100, especially its core network 120, i.e., typically, 5G core network functions, over the following interfaces or reference points towards network functions or services of the core network 120 (that are not explicitly shown in Figure 3):
-- an T8/N33 reference point 121' to a network exposure function, NEF, of the core network 120

According to the representation schematically shown in Figure 3, the vertical application layer server 401 is able to be understood as a vertical application layer sensing capability enabler service customer. According to such a situation, scenario or embodiment, between the vertical application layer server 401 and the sensing capability enabler server 302, an interface or reference point 302' is realized, especially of the type SC-S (sensing capability enabler-server).
Hence, the vertical application layer server 401 (or the vertical application layer servers) communicates with the sensing capability enabler server 302 over the SC-S reference point 302'. It is to be understood, that a plurality of vertical application layer servers (corresponding to the vertical application layer server 401) are able to be present and part of the vertical application layer 400 (but are not represented in Figure 3 for the sake of simplicity).

Via an interface (or reference point) SEAL-X (service enabler architecture layer for verticals-X) - not specifically shown in Figure 3 - the sensing capability enabler server 302 might be connected to a location management server LMS (not represented in Figure 3), i.e. the sensing capability enabler server 302 interacts with location management server LMS for inter-service communication over the SEAL-X reference point. This is represented in Figure 5 which schematically illustrates how the sensing capability enabler server 302 is linked to the location management server LMS and to the vertical application layer server 401: The interface between the sensing capability enabler server 302 towards the vertical application layer server 401 especially corresponds to a SEAL-S interface (reference sign 302' - service enabler architecture layer for verticals-S), wherein the interface between the sensing capability enabler server 302 towards the location management server LMS especially corresponds to a SEAL-X interface (reference sign 302" - service enabler architecture layer for verticals-X).

Figure 4 schematically illustrates a representation of a communication diagram between the user equipment 20, the sensing capability enabler server 302, the sensing function SF, and a location management function LMF or an location management server LMS of an exemplary implementation of the service enabler architecture layer for verticals for supporting and providing the requested wireless sensing service operation, especially the area-related notification functionality according to the present invention.

In a first processing step 511, the user equipment 20 - especially the sensing capability enabler client 22 thereof - (the vertical application layer server 401) sends a subscription request, i.e. a request regarding a sensing monitoring function or regarding a corresponding integrated sensing and communication service (in the context of the present invention called sensing monitoring registration request message), towards the sensing capability enabler server 302. The sensing monitoring registration request message preferably and especially contains one or a plurality out of the following: a target sensing service location area, the object size above which notification for presence is expected in the target area and/or timer or start time / end time for which the subscription is valid.

The sensing capability enabler server 302 selects a corresponding sensing function SF (corresponding to the second processing step 512) and has connectivity via the N33 interface or reference point (reference sign 121' in Figure 3) with 5G core network sensing function and acts as application function AF to subscribe to sensing function SF via network exposure function (third and fourth processing steps 513, 514 in Figure 4).

In the fifth processing step 515, the sensing capability enabler server 302 gets a subscription response from the sensing function SF (via network exposure function NEF) with confirmation or rejection of the subscription request (corresponding to the sensing monitoring registration response message).

Analogously to what has been described regarding Figure 2, the sensing capability enabler server 302 also sends (in a sixth processing step 516) a subscription request (location monitoring registration request message) towards location management function LMF (via N33/NEF as the LMF is part of the core network) or location management server LMS (via SEAL-X interface) asking for receiving the user equipment identifiers with their exact location in the same target sensing service location area. In a seventh processing step 517 the sensing capability enabler server 302 gets a subscription response (monitoring confirmation) from the location management function LMF or location management server LMS.
Likewise as part of the seventh processing step 517, the sensing capability enabler server 302 sends the subscription reply (as the sensing monitoring registration response message) to the requesting VAL server or sensing capability enabler client 22 with positive or negative response on the success of the subscription.

In a ninth processing step 519, and if there is object/s present in the area, the sensing function SF sends a notification towards the sensing capability enabler server 302 with object coordinates and size, and the sensing capability enabler server 302 transmits a corresponding information (sensing monitoring event message) to the requesting entity, i.e. the vertical application layer server 401 or the sensing capability enabler client 22. Based on the available resolution and object size and shape it can be even classified as for example rock, animal, human. It can be determined in the subscription request only notification when human is detected to be sent (for example if there is a cat left at home).

If there is a user equipment present in the monitored area, the location management function LMF or location management server LMS sends - in an eighth processing step 518 (especially prior to the ninth processing step 519 in order to be able to integrate all relevant pieces of information) - a notification with the location information of the user equipment or user equipments.
Especially, the sensing capability enabler server 302 checks if the coordinates of the detected object match the received user equipment identifiers coordinates. If there is a match and there is user consent present, the sensing capability enabler server 302 sends the information about the objects and the user equipment identifiers towards the vertical application layer server 401 (and/or to the sensing capability enabler client 22) in notification message (i.e. as a sensing monitoring event message). If there is not a match or lack of consent the sensing capability enabler server 302 sends only the object coordinates as notification towards the vertical application layer server 401 (and/or to the sensing capability enabler client 22).

## Claims

1. Method for using a requesting entity for requesting and/or initiating a wireless sensing service operation provided by a mobile communication network (100), the mobile communication network (100) comprising or having a core network (120), wherein the mobile communication network (100) comprises a sensing capability enabler server (302), and wherein a radio access network (110) of, or being assigned to, the mobile communication network (100) and/or a further radio access network of, or being assigned to, a further mobile communication network, comprises a sensing function (SF),
wherein, in order to conduct the requested wireless sensing service operation, the method comprises the following steps:
-- in a first step, the requesting entity transmits a sensing monitoring registration request message, wherein the requesting entity is or corresponds to a sensing capability enabler client (22), and wherein the sensing capability enabler client (22) sends the sensing monitoring registration request message via a sensing capability enabler interface (22") to the sensing capability enabler server (302) or the requesting entity is or corresponds to a vertical application layer server (401), and wherein the vertical application layer server (401) sends the sensing monitoring registration request message via a sensing capability enabler interface (302') to the sensing capability enabler server (302), wherein by means of the sensing monitoring registration request message, the requesting entity requests the wireless sensing service operation to be initiated and conducted and be provided with any results thereof, wherein the wireless sensing service operation is defined by the sensing monitoring registration request message and wherein the wireless sensing service operation relates to providing sensing result regarding a specific location or specific geographical area and regarding at least one kind of sensing event occurring at the specific location or within the specific geographical area,
-- in a second step, the requesting entity receives a sensing monitoring registration response message responding to the sensing monitoring registration request message,
-- in a third step, the requesting entity receives a sensing monitoring event message in case that the at least one kind of sensing event has occurred at the specific location or within the specific geographical area,
wherein the sensing capability enabler server (302) is acting as a location monitoring requesting entity which transmits a location monitoring registration request message to a location management function (LMF) or to a location management server (LMS) asking for receiving user equipment identifiers with corresponding location information at the specific location or within the specific geographical area, wherein the location monitoring requesting entity receives a monitoring confirmation and, if the positioning functionality of the location management function or the location management server detects user equipments entering the specific location or the specific geographical area, receives from the location management function or the location management server a location monitoring event message including such user equipment identifiers with the corresponding location information, and wherein, upon detecting an object or a living being that is detected at the specific location or within the specific geographical area, the location monitoring requesting entity matches the object location or location of the living being obtained from the sensing function (SF) with the received location information of user equipments and transmits, as the sensing monitoring event message, information about the object or living being together with the user equipment identifiers for which a match has been determined.

2. Method according to claim 1, wherein the sensing monitoring event corresponds to an object or to a living being that is detected - with respect to the specific location or specific geographical area - as either being present where it has previously been absent or detected to be absent, or absent where it has previously been present or detected to be present.

3. Method according to one of the preceding claims, wherein both the sensing monitoring registration response message and the sensing monitoring event message is received, by the sensing capability enabler client (22) being the requesting entity, from the sensing capability enabler server (302) via the sensing capability enabler interface 22".

4. Method according to one of claims 1 or 2, wherein both the sensing monitoring registration response message and the sensing monitoring event message is received, by the vertical application layer server (401) being the requesting entity, from the sensing capability enabler server (302) via the sensing capability enabler interface (302').

5. Method according to one of the preceding claims, wherein a service enabler architecture layer for verticals, SEAL, is used in a vertical application layer implementation, VAL implementation, for requesting and/or initiating the wireless sensing service operation provided by the mobile communication network (100) to provide communication services, to the requesting entity being a user equipment (20), using the vertical application layer server (401) via the telecommunications network (100), especially for supporting and providing a location-related notification functionality and/or for providing location-related and event-related notification data, wherein the user equipment (20) is a vertical application layer user equipment (20) comprising a vertical application layer client, VAL client, (21) and the sensing capability enabler client (22),
wherein the service enabler architecture layer for verticals comprises the sensing capability enabler server (302) that is able to realize an area-related notification functionality by means of acting as a requesting entity, especially as an application function.

6. Sensing capability enabler client (22) or vertical application layer server (401) for being used as a requesting entity for requesting and/or initiating a wireless sensing service operation provided by a mobile communication network (100) that comprises or has a core network (120) and with a radio access network (110) being assigned to the mobile communication network (100) comprising sensing function (SF),
wherein, in order to conduct the requested wireless sensing service operation, the sensing capability enabler client (22) or vertical application layer server (401), being used as the requesting entity, is configured such that:
-- the sensing capability enabler client (22) or vertical application layer server (401) , as the requesting entity, transmits a sensing monitoring registration request message, wherein by means of the sensing monitoring registration request message, the requesting entity requests the wireless sensing service operation to be initiated and conducted and be provided with any results thereof, wherein the wireless sensing service operation is defined by the sensing monitoring registration request message and wherein the wireless sensing service operation relates to providing sensing result regarding a specific location or specific geographical area and regarding at least one kind of sensing event occurring at the specific location or within the specific geographical area,
-- the sensing capability enabler client (22) or vertical application layer server (401), as the requesting entity, receives a sensing monitoring registration response message responding to the sensing monitoring registration request message,
-- the sensing capability enabler client (22) or vertical application layer server (401), as the requesting entity, receives a sensing monitoring event message in case that the at least one kind of sensing event has occurred at the specific location or within the specific geographical area, wherein the sensing monitoring event message comprises information about an object or living being detected at the specific location or within the specific geographical area together with user equipment identifiers for which a match has been determined by matching an object location or location of the living being obtained from the sensing function (SF) with location information of user equipments received from a location management function (LMF) or from a location management server (LMS).

7. Mobile communication network (100) for using a requesting entity for requesting and/or initiating a wireless sensing service operation provided by the mobile communication network (100), the mobile communication network (100) comprising or having a core network (120),
wherein a radio access network (110) of, or being assigned to, the mobile communication network (100) and/or a further radio access network of, or being assigned to, a further mobile communication network, comprises a sensing function (SF),
wherein, in order to conduct the requested wireless sensing service operation the mobile communication network is configured such that it comprisesa sensing capability enabler server (302), the sensing capability enabler server (302) being configured to:
-- receive, from the requesting entity, a sensing monitoring registration request message, wherein the requesting entity is or corresponds to a sensing capability enabler client (22), and wherein the sensing capability enabler client (22) sends the sensing monitoring registration request message via a sensing capability enabler interface (22") to a sensing capability enabler server (302) or the requesting entity is or corresponds to a vertical application layer server (401), and wherein the vertical application layer server (401) sends the sensing monitoring registration request message via a sensing capability enabler interface (302') to the sensing capability enabler server (302), wherein by means of the sensing monitoring registration request message, the requesting entity requests the wireless sensing service operation to be initiated and conducted and be provided with any results thereof, wherein the wireless sensing service operation is defined by the sensing monitoring registration request message and wherein the wireless sensing service operation relates to providing sensing result regarding a specific location or specific geographical area and regarding at least one kind of sensing event occurring at the specific location or within the specific geographical area,
-- send, to the requesting entity, a sensing monitoring registration response message responding to the sensing monitoring registration request message,
-- send, to the requesting entity, a sensing monitoring event message in case that the at least one kind of sensing monitoring event has occurred at the specific location or within the specific geographical area,
wherein the sensing capability enabler server (302) is configured to act as a location monitoring requesting entity which is configured to transmit a location monitoring registration request message to a location management function (LMF) or to a location management server (LMS) asking for receiving user equipment identifiers with corresponding location information at the specific location or within the specific geographical area, wherein the location monitoring requesting entity is configured to receive a monitoring confirmation and, if the positioning functionality of the location management function or the location management server detects user equipments entering the specific location or the specific geographical area, to receive from the location management function or the location management server a location monitoring event message including such user equipment identifiers with the corresponding location information, and wherein, upon detecting an object or a living being that is detected at the specific location or within the specific geographical area, the location monitoring requesting entity is configured to match the object location or location of the living being obtained from the sensing function (SF) with the received location information of user equipments and to transmit, as the sensing monitoring event message, information about the object or living being together with the user equipment identifiers for which a match has been determined.

8. Program comprising a computer-readable program code which, when executed byone or more processors of the mobile communication network (100) according to claim 7, causes the mobile communication network (100) to perform the operations for which it is configured according to claim 7.

9. Computer-readable medium storing a program according to claim 8.

## Patentansprüche

1. Verfahren zur Verwendung einer anfragenden Entität zum Anfordern und/oder Initiieren eines drahtlosen Sensordienstbetriebs, der von einem mobilen Kommunikationsnetz (100) bereitgestellt wird, wobei das mobile Kommunikationsnetz (100) ein Kernnetz (120) umfasst oder aufweist, wobei das mobile Kommunikationsnetz (100) einen Sensorfähigkeits-Enabler-Server (302) umfasst, und wobei ein Funkzugangsnetz (110), das dem mobilen Kommunikationsnetz (100) zugeordnet ist oder diesem angehört, und/oder ein weiteres Funkzugangsnetz, das einem weiteren mobilen Kommunikationsnetz zugeordnet ist oder diesem angehört, eine Sensorfunktion (SF) umfasst, wobei das Verfahren, um den angeforderten drahtlosen Sensordienstbetrieb durchzuführen, die folgenden Schritte umfasst:
-- in einem ersten Schritt sendet die anfragende Entität eine Sensorüberwachungs-Registrierungsanfragenachricht, wobei die anfragende Entität ein Sensorfähigkeits-Enabler-Client (22) ist oder diesem entspricht, und wobei der Sensorfähigkeits-Enabler-Client (22) die Sensorüberwachungs-Registrierungsanfragenachricht über eine Sensorfähigkeits-Enabler-Schnittstelle (22'') an den Sensorfähigkeits-Enabler-Server (302) sendet, oder die anfragende Entität ein vertikaler Anwendungsschicht-Server (401) ist oder diesem entspricht, und wobei der vertikale Anwendungsschicht-Server (401) die Sensorüberwachungs-Registrierungsanfragenachricht über eine Sensorfähigkeits-Enabler-Schnittstelle (302') an den Sensorfähigkeits-Enabler-Server (302) sendet, wobei mittels der Sensorüberwachungs-Registrierungsanfragenachricht die anfragende Entität anfordert, dass der drahtlose Sensordienstbetrieb initiiert und durchgeführt wird und ihr etwaige Ergebnisse davon bereitgestellt werden, wobei der drahtlose Sensordienstbetrieb durch die Sensorüberwachungs-Registrierungsanfragenachricht definiert wird und wobei sich der drahtlose Sensordienstbetrieb auf die Bereitstellung eines Sensorergebnisses bezüglich eines bestimmten Ortes oder eines bestimmten geografischen Gebiets und bezüglich mindestens einer Art von Sensorereignis, das an dem bestimmten Ort oder innerhalb des bestimmten geografischen Gebiets auftritt, bezieht,
-- in einem zweiten Schritt empfängt die anfragende Entität eine Sensorüberwachungs-Registrierungsantwortnachricht, die auf die Sensorüberwachungs-Registrierungsanfragenachricht antwortet,
-- in einem dritten Schritt empfängt die anfragende Entität eine Sensorüberwachungs-Ereignisnachricht, falls die mindestens eine Art von Sensorereignis an dem bestimmten Ort oder innerhalb des bestimmten geografischen Gebiets aufgetreten ist,
wobei der Sensorfähigkeits-Enabler-Server (302) als eine Standortüberwachungs-anfragende Entität fungiert, die eine Standortüberwachungs-Registrierungsanfragenachricht an eine Standortverwaltungsfunktion (LMF) oder an einen Standortverwaltungsserver (LMS) sendet, um Nutzergerätekennungen mit entsprechender Standortinformation an dem bestimmten Ort oder innerhalb des bestimmten geografischen Gebiets zu erhalten, wobei die Standortüberwachungs-anfragende Entität eine Überwachungsbestätigung empfängt und, falls die Positionierungsfunktionalität der Standortverwaltungsfunktion oder des Standortverwaltungsservers erfasst, dass Nutzergeräte den bestimmten Ort oder das bestimmte geografische Gebiet betreten, von der Standortverwaltungsfunktion oder dem Standortverwaltungsserver eine Standortüberwachungs-Ereignisnachricht empfängt, die derartige Nutzergerätekennungen mit der entsprechenden Standortinformation enthält, und wobei, bei Erfassung eines Objekts oder eines Lebewesens, das an dem bestimmten Ort oder innerhalb des bestimmten geografischen Gebiets erfasst wird, die Standortüberwachungs-anfragende Entität den Objektstandort oder den Standort des Lebewesens, der von der Sensorfunktion (SF) erhalten wird, mit der empfangenen Standortinformation von Nutzergeräten abgleicht und, als die Sensorüberwachungs-Ereignisnachricht, Informationen über das Objekt oder das Lebewesen zusammen mit den Nutzergerätekennungen sendet, für die eine Übereinstimmung festgestellt wurde.

2. Verfahren nach Anspruch 1, wobei das Sensorüberwachungsereignis einem Objekt oder einem Lebewesen entspricht, das - in Bezug auf den bestimmten Ort oder das bestimmte geografische Gebiet - entweder als anwesend erkannt wird, wo es zuvor abwesend war oder als abwesend erkannt wurde, oder als abwesend erkannt wird, wo es zuvor anwesend war oder als anwesend erkannt wurde.

3. Verfahren nach einem der vorhergehenden Ansprüche, wobei sowohl die Sensorüberwachungs-Registrierungsantwortnachricht als auch die Sensorüberwachungs-Ereignisnachricht von dem Sensorfähigkeits-Enabler-Client (22), der die anfragende Entität ist, von dem Sensorfähigkeits-Enabler-Server (302) über die Sensorfähigkeits-Enabler-Schnittstelle 22'' empfangen wird.

4. Verfahren nach einem der Ansprüche 1 oder 2, wobei sowohl die Sensorüberwachungs-Registrierungsantwortnachricht als auch die Sensorüberwachungs-Ereignisnachricht von dem vertikalen Anwendungsschicht-Server (401), der die anfragende Entität ist, von dem Sensorfähigkeits-Enabler-Server (302) über die Sensorfähigkeits-Enabler-Schnittstelle (302') empfangen wird.

5. Verfahren nach einem der vorhergehenden Ansprüche, wobei eine Dienstermöglichungs-Architekturschicht für Vertikals, SEAL, in einer Implementierung der vertikalen Anwendungsschicht, VAL-Implementierung, verwendet wird, zum Anfordern und/oder Initiieren des drahtlosen Sensordienstbetriebs, der von dem mobilen Kommunikationsnetz (100) bereitgestellt wird, um Kommunikationsdienste bereitzustellen, an die anfragende Entität, die ein Nutzergerät (20) ist, unter Verwendung des vertikalen Anwendungsschicht-Servers (401) über das Telekommunikationsnetz (100), insbesondere zur Unterstützung und Bereitstellung einer standortbezogenen Benachrichtigungsfunktionalität und/oder zur Bereitstellung standortbezogener und ereignisbezogener Benachrichtigungsdaten, wobei das Nutzergerät (20) ein Nutzergerät der vertikalen Anwendungsschicht (20) ist, das einen vertikalen Anwendungsschicht-Client, VAL-Client, (21) und den Sensorfähigkeits-Enabler-Client (22) umfasst, wobei die Dienstermöglichungs-Architekturschicht für Vertikalen den Sensorfähigkeits-Enabler-Server (302) umfasst, der in der Lage ist, eine gebietsbezogene Benachrichtigungsfunktionalität dadurch zu realisieren, dass er als anfragende Entität fungiert, insbesondere als Anwendungsfunktion.

6. Sensorfähigkeits-Enabler-Client (22) oder vertikaler Anwendungsschicht-Server (401) zur Verwendung als anfragende Entität zum Anfordern und/oder Initiieren eines drahtlosen Sensordienstbetriebs, der von einem mobilen Kommunikationsnetz (100) bereitgestellt wird, das ein Kernnetz (120) umfasst oder aufweist, und mit einem Funkzugangsnetz (110), das dem mobilen Kommunikationsnetz (100) zugeordnet ist und eine Sensorfunktion (SF) umfasst, wobei der Sensorfähigkeits-Enabler-Client (22) oder der vertikale Anwendungsschicht-Server (401), der als die anfragende Entität verwendet wird, so konfiguriert ist, dass, um den angeforderten drahtlosen Sensordienstbetrieb durchzuführen:
-- der Sensorfähigkeits-Enabler-Client (22) oder der vertikale Anwendungsschicht-Server (401) als die anfragende Entität eine Sensorüberwachungs-Registrierungsanfragenachricht sendet, wobei mittels der Sensorüberwachungs-Registrierungsanfragenachricht die anfragende Entität anfordert, dass der drahtlose Sensordienstbetrieb initiiert und durchgeführt wird und ihr etwaige Ergebnisse davon bereitgestellt werden, wobei der drahtlose Sensordienstbetrieb durch die Sensorüberwachungs-Registrierungsanfragenachricht definiert wird und wobei sich der drahtlose Sensordienstbetrieb auf die Bereitstellung eines Sensorergebnisses bezüglich eines bestimmten Ortes oder eines bestimmten geografischen Gebiets und bezüglich mindestens einer Art von Sensorereignis, das an dem bestimmten Ort oder innerhalb des bestimmten geografischen Gebiets auftritt, bezieht,
-- der Sensorfähigkeits-Enabler-Client (22) oder der vertikale Anwendungsschicht-Server (401) als die anfragende Entität eine Sensorüberwachungs-Registrierungsantwortnachricht empfängt, die auf die Sensorüberwachungs-Registrierungsanfragenachricht antwortet,
-- der Sensorfähigkeits-Enabler-Client (22) oder der vertikale Anwendungsschicht-Server (401) als die anfragende Entität eine Sensorüberwachungs-Ereignisnachricht empfängt, falls die mindestens eine Art von Sensorereignis an dem bestimmten Ort oder innerhalb des bestimmten geografischen Gebiets aufgetreten ist, wobei die Sensorüberwachungs-Ereignisnachricht Informationen über ein Objekt oder ein Lebewesen umfasst, das an dem bestimmten Ort oder innerhalb des bestimmten geografischen Gebiets erfasst wird, zusammen mit Nutzergerätekennungen, für die eine Übereinstimmung festgestellt wurde, durch Abgleichen eines Objektstandorts oder des Standorts des Lebewesens, der von der Sensorfunktion (SF) erhalten wird, mit Standortinformationen von Nutzergeräten, die von einer Standortverwaltungsfunktion (LMF) oder von einem Standortverwaltungsserver (LMS) empfangen werden.

7. Mobiles Kommunikationsnetz (100) zur Verwendung einer anfragenden Entität zum Anfordern und/oder Initiieren eines drahtlosen Sensordienstbetriebs, der von dem mobilen Kommunikationsnetz (100) bereitgestellt wird, wobei das mobile Kommunikationsnetz (100) ein Kernnetz (120) umfasst oder aufweist, wobei ein Funkzugangsnetz (110), das dem mobilen Kommunikationsnetz (100) zugeordnet ist oder diesem angehört, und/oder ein weiteres Funkzugangsnetz, das einem weiteren mobilen Kommunikationsnetz zugeordnet ist oder diesem angehört, eine Sensorfunktion (SF) umfasst, wobei, um den angeforderten drahtlosen Sensordienstbetrieb durchzuführen, das mobile Kommunikationsnetz derart konfiguriert ist, dass es einen Sensorfähigkeits-Enabler-Server (302) umfasst, wobei der Sensorfähigkeits-Enabler-Server (302) konfiguriert ist zum:
-- Empfangen, von der anfragenden Entität, einer Sensorüberwachungs-Registrierungsanfragenachricht, wobei die anfragende Entität ein Sensorfähigkeits-Enabler-Client (22) ist oder diesem entspricht, und wobei der Sensorfähigkeits-Enabler-Client (22) die Sensorüberwachungs-Registrierungsanfragenachricht über eine Sensorfähigkeits-Enabler-Schnittstelle (22'') an einen Sensorfähigkeits-Enabler-Server (302) sendet, oder die anfragende Entität ein vertikaler Anwendungsschicht-Server (401) ist oder diesem entspricht, und wobei der vertikale Anwendungsschicht-Server (401) die Sensorüberwachungs-Registrierungsanfragenachricht über eine Sensorfähigkeits-Enabler-Schnittstelle (302') an den Sensorfähigkeits-Enabler-Server (302) sendet, wobei mittels der Sensorüberwachungs-Registrierungsanfragenachricht die anfragende Entität anfordert, dass der drahtlose Sensordienstbetrieb initiiert und durchgeführt wird und ihr etwaige Ergebnisse davon bereitgestellt werden, wobei der drahtlose Sensordienstbetrieb durch die Sensorüberwachungs-Registrierungsanfragenachricht definiert wird und wobei sich der drahtlose Sensordienstbetrieb auf die Bereitstellung eines Sensorergebnisses bezüglich eines bestimmten Ortes oder eines bestimmten geografischen Gebiets und bezüglich mindestens einer Art von Sensorereignis, das an dem bestimmten Ort oder innerhalb des bestimmten geografischen Gebiets auftritt, bezieht,
-- Senden, an die anfragende Entität, einer Sensorüberwachungs-Registrierungsantwortnachricht, die auf die Sensorüberwachungs-Registrierungsanfragenachricht antwortet,
-- Senden, an die anfragende Entität, einer Sensorüberwachungs-Ereignisnachricht, falls die mindestens eine Art von Sensorüberwachungsereignis an dem bestimmten Ort oder innerhalb des bestimmten geografischen Gebiets aufgetreten ist,
wobei der Sensorfähigkeits-Enabler-Server (302) konfiguriert ist, als eine Standortüberwachungs-anfragende Entität zu fungieren, die konfiguriert ist, eine Standortüberwachungs-Registrierungsanfragenachricht an eine Standortverwaltungsfunktion (LMF) oder an einen Standortverwaltungsserver (LMS) zu senden, um Nutzergerätekennungen mit entsprechender Standortinformation an dem bestimmten Ort oder innerhalb des bestimmten geografischen Gebiets zu erhalten, wobei die Standortüberwachungs-anfragende Entität konfiguriert ist, eine Überwachungsbestätigung zu empfangen und, falls die Positionierungsfunktionalität der Standortverwaltungsfunktion oder des Standortverwaltungsservers erfasst, dass Nutzergeräte den bestimmten Ort oder das bestimmte geografische Gebiet betreten, von der Standortverwaltungsfunktion oder dem Standortverwaltungsserver eine Standortüberwachungs-Ereignisnachricht zu empfangen, die derartige Nutzergerätekennungen mit der entsprechenden Standortinformation enthält, und wobei, bei Erfassung eines Objekts oder eines Lebewesens, das an dem bestimmten Ort oder innerhalb des bestimmten geografischen Gebiets erfasst wird, die Standortüberwachungs-anfragende Entität konfiguriert ist, den Objektstandort oder den Standort des Lebewesens, der von der Sensorfunktion (SF) erhalten wird, mit der empfangenen Standortinformation von Nutzergeräten abzugleichen und, als die Sensorüberwachungs-Ereignisnachricht, Informationen über das Objekt oder das Lebewesen zusammen mit den Nutzergerätekennungen zu senden, für die eine Übereinstimmung festgestellt wurde.

8. Programm, umfassend einen computerlesbaren Programmcode, der, wenn er von einem oder mehreren Prozessoren des mobilen Kommunikationsnetzes (100) nach Anspruch 7 ausgeführt wird, das mobile Kommunikationsnetz (100) veranlasst, die Operationen auszuführen, für die es gemäß Anspruch 7 konfiguriert ist.

9. Computerlesbares Medium, das ein Programm nach Anspruch 8 speichert.

## Revendications

1. Procédé d'utilisation d'une entité demanderesse pour demander et/ou initier une opération de service de détection sans fil fournie par un réseau de communication mobile (100), le réseau de communication mobile (100) comprenant ou possédant un réseau central (120), dans lequel le réseau de communication mobile (100) comprend un serveur habilitateur de capacité de détection (302), et dans lequel un réseau d'accès radio (110) du réseau de communication mobile (100), ou attribué à celui-ci, et/ou un autre réseau d'accès radio d'un autre réseau de communication mobile, ou attribué à celui-ci, comprend une fonction de détection (SF), dans lequel, afin d'exécuter l'opération de service de détection sans fil demandée, le procédé comprend les étapes suivantes :
-- dans une première étape, l'entité demanderesse transmet un message de demande d'enregistrement de surveillance de détection, dans lequel l'entité demanderesse est ou correspond à un client habilitateur de capacité de détection (22), et dans lequel le client habilitateur de capacité de détection (22) envoie le message de demande d'enregistrement de surveillance de détection via une interface habilitatrice de capacité de détection (22'') au serveur habilitateur de capacité de détection (302), ou l'entité demanderesse est ou correspond à un serveur de couche d'application verticale (401), et dans lequel le serveur de couche d'application verticale (401) envoie le message de demande d'enregistrement de surveillance de détection via une interface habilitatrice de capacité de détection (302') au serveur habilitateur de capacité de détection (302), dans lequel, au moyen du message de demande d'enregistrement de surveillance de détection, l'entité demanderesse demande que l'opération de service de détection sans fil soit initiée et exécutée et que tout résultat de celle-ci lui soit fourni, dans lequel l'opération de service de détection sans fil est définie par le message de demande d'enregistrement de surveillance de détection et dans lequel l'opération de service de détection sans fil concerne la fourniture d'un résultat de détection relatif à un emplacement spécifique ou à une zone géographique spécifique et relatif à au moins un type d'événement de détection se produisant à l'emplacement spécifique ou dans la zone géographique spécifique,
-- dans une deuxième étape, l'entité demanderesse reçoit un message de réponse d'enregistrement de surveillance de détection répondant au message de demande d'enregistrement de surveillance de détection,
-- dans une troisième étape, l'entité demanderesse reçoit un message d'événement de surveillance de détection dans le cas où l'au moins un type d'événement de détection s'est produit à l'emplacement spécifique ou dans la zone géographique spécifique,
dans lequel le serveur habilitateur de capacité de détection (302) agit en tant qu'entité demanderesse de surveillance de localisation qui transmet un message de demande d'enregistrement de surveillance de localisation à une fonction de gestion de localisation (LMF) ou à un serveur de gestion de localisation (LMS) demandant à recevoir des identifiants d'équipement utilisateur avec des informations de localisation correspondantes, à l'emplacement spécifique ou dans la zone géographique spécifique, dans lequel l'entité demanderesse de surveillance de localisation reçoit une confirmation de surveillance et, si la fonctionnalité de positionnement de la fonction de gestion de localisation ou du serveur de gestion de localisation détecte des équipements utilisateur entrant dans l'emplacement spécifique ou la zone géographique spécifique, reçoit de la fonction de gestion de localisation ou du serveur de gestion de localisation un message d'événement de surveillance de localisation incluant de tels identifiants d'équipement utilisateur avec les informations de localisation correspondantes, et dans lequel, lors de la détection d'un objet ou d'un être vivant détecté à l'emplacement spécifique ou dans la zone géographique spécifique, l'entité demanderesse de surveillance de localisation fait correspondre l'emplacement de l'objet ou l'emplacement de l'être vivant obtenu à partir de la fonction de détection (SF) avec les informations de localisation d'équipements utilisateur reçues et transmet, en tant que message d'événement de surveillance de détection, des informations sur l'objet ou l'être vivant conjointement avec les identifiants d'équipement utilisateur pour lesquels une correspondance a été déterminée.

2. Procédé selon la revendication 1, dans lequel l'événement de surveillance de détection correspond à un objet ou à un être vivant qui est détecté - par rapport à l'emplacement spécifique ou à la zone géographique spécifique - comme étant soit présent alors qu'il était auparavant absent ou détecté comme absent, soit absent alors qu'il était auparavant présent ou détecté comme présent.

3. Procédé selon l'une des revendications précédentes, dans lequel tant le message de réponse d'enregistrement de surveillance de détection que le message d'événement de surveillance de détection sont reçus, par le client habilitateur de capacité de détection (22) étant l'entité demanderesse, en provenance du serveur habilitateur de capacité de détection (302) via l'interface habilitatrice de capacité de détection 22''.

4. Procédé selon l'une des revendications 1 ou 2, dans lequel tant le message de réponse d'enregistrement de surveillance de détection que le message d'événement de surveillance de détection sont reçus, par le serveur de couche d'application verticale (401) étant l'entité demanderesse, en provenance du serveur habilitateur de capacité de détection (302) via l'interface habilitatrice de capacité de détection (302').

5. Procédé selon l'une des revendications précédentes, dans lequel une couche d'architecture habilitatrice de services pour verticales, SEAL, est utilisée dans une mise en œuvre de la couche d'application verticale, mise en œuvre VAL, pour demander et/ou initier l'opération de service de détection sans fil fournie par le réseau de communication mobile (100) afin de fournir des services de communication, à l'entité demanderesse étant un équipement utilisateur (20), en utilisant le serveur de couche d'application verticale (401) via le réseau de télécommunications (100), notamment pour soutenir et fournir une fonctionnalité de notification liée à la localisation et/ou pour fournir des données de notification liées à la localisation et aux événements, dans lequel l'équipement utilisateur (20) est un équipement utilisateur de couche d'application verticale (20) comprenant un client de couche d'application verticale, client VAL, (21) et le client habilitateur de capacité de détection (22), dans lequel la couche d'architecture habilitatrice de services pour verticales comprend le serveur habilitateur de capacité de détection (302) qui est capable de réaliser une fonctionnalité de notification liée à une zone en agissant en tant qu'entité demanderesse, notamment en tant que fonction d'application.

6. Client habilitateur de capacité de détection (22) ou serveur de couche d'application verticale (401) destiné à être utilisé en tant qu'entité demanderesse pour demander et/ou initier une opération de service de détection sans fil fournie par un réseau de communication mobile (100) comprenant ou possédant un réseau central (120) et avec un réseau d'accès radio (110) attribué au réseau de communication mobile (100) comprenant une fonction de détection (SF), dans lequel, afin d'exécuter l'opération de service de détection sans fil demandée, le client habilitateur de capacité de détection (22) ou le serveur de couche d'application verticale (401), utilisé en tant qu'entité demanderesse, est configuré de telle sorte que :
-- le client habilitateur de capacité de détection (22) ou le serveur de couche d'application verticale (401), en tant qu'entité demanderesse, transmet un message de demande d'enregistrement de surveillance de détection, dans lequel, au moyen du message de demande d'enregistrement de surveillance de détection, l'entité demanderesse demande que l'opération de service de détection sans fil soit initiée et exécutée et que tout résultat de celle-ci lui soit fourni, dans lequel l'opération de service de détection sans fil est définie par le message de demande d'enregistrement de surveillance de détection et dans lequel l'opération de service de détection sans fil concerne la fourniture d'un résultat de détection relatif à un emplacement spécifique ou à une zone géographique spécifique et relatif à au moins un type d'événement de détection se produisant à l'emplacement spécifique ou dans la zone géographique spécifique,
-- le client habilitateur de capacité de détection (22) ou le serveur de couche d'application verticale (401), en tant qu'entité demanderesse, reçoit un message de réponse d'enregistrement de surveillance de détection répondant au message de demande d'enregistrement de surveillance de détection,
-- le client habilitateur de capacité de détection (22) ou le serveur de couche d'application verticale (401), en tant qu'entité demanderesse, reçoit un message d'événement de surveillance de détection dans le cas où l'au moins un type d'événement de détection s'est produit à l'emplacement spécifique ou dans la zone géographique spécifique, dans lequel le message d'événement de surveillance de détection comprend des informations sur un objet ou un être vivant détecté à l'emplacement spécifique ou dans la zone géographique spécifique conjointement avec des identifiants d'équipement utilisateur pour lesquels une correspondance a été déterminée en faisant correspondre un emplacement de l'objet ou un emplacement de l'être vivant obtenu à partir de la fonction de détection (SF) avec des informations de localisation d'équipements utilisateur reçues d'une fonction de gestion de localisation (LMF) ou d'un serveur de gestion de localisation (LMS).

7. Réseau de communication mobile (100) destiné à l'utilisation d'une entité demanderesse pour demander et/ou initier une opération de service de détection sans fil fournie par le réseau de communication mobile (100), le réseau de communication mobile (100) comprenant ou possédant un réseau central (120), dans lequel un réseau d'accès radio (110) du réseau de communication mobile (100), ou attribué à celui-ci, et/ou un autre réseau d'accès radio d'un autre réseau de communication mobile, ou attribué à celui-ci, comprend une fonction de détection (SF), dans lequel, afin d'exécuter l'opération de service de détection sans fil demandée, le réseau de communication mobile est configuré de telle sorte qu'il comprend un serveur habilitateur de capacité de détection (302), le serveur habilitateur de capacité de détection (302) étant configuré pour :
-- recevoir, en provenance de l'entité demanderesse, un message de demande d'enregistrement de surveillance de détection, dans lequel l'entité demanderesse est ou correspond à un client habilitateur de capacité de détection (22), et dans lequel le client habilitateur de capacité de détection (22) envoie le message de demande d'enregistrement de surveillance de détection via une interface habilitatrice de capacité de détection (22'') à un serveur habilitateur de capacité de détection (302), ou l'entité demanderesse est ou correspond à un serveur de couche d'application verticale (401), et dans lequel le serveur de couche d'application verticale (401) envoie le message de demande d'enregistrement de surveillance de détection via une interface habilitatrice de capacité de détection (302') au serveur habilitateur de capacité de détection (302), dans lequel, au moyen du message de demande d'enregistrement de surveillance de détection, l'entité demanderesse demande que l'opération de service de détection sans fil soit initiée et exécutée et que tout résultat de celle-ci lui soit fourni, dans lequel l'opération de service de détection sans fil est définie par le message de demande d'enregistrement de surveillance de détection et dans lequel l'opération de service de détection sans fil concerne la fourniture d'un résultat de détection relatif à un emplacement spécifique ou à une zone géographique spécifique et relatif à au moins un type d'événement de détection se produisant à l'emplacement spécifique ou dans la zone géographique spécifique,
-- envoyer, à l'entité demanderesse, un message de réponse d'enregistrement de surveillance de détection répondant au message de demande d'enregistrement de surveillance de détection,
-- envoyer, à l'entité demanderesse, un message d'événement de surveillance de détection dans le cas où l'au moins un type d'événement de surveillance de détection s'est produit à l'emplacement spécifique ou dans la zone géographique spécifique,
dans lequel le serveur habilitateur de capacité de détection (302) est configuré pour agir en tant qu'entité demanderesse de surveillance de localisation qui est configurée pour transmettre un message de demande d'enregistrement de surveillance de localisation à une fonction de gestion de localisation (LMF) ou à un serveur de gestion de localisation (LMS) demandant à recevoir des identifiants d'équipement utilisateur avec des informations de localisation correspondantes à l'emplacement spécifique ou dans la zone géographique spécifique, dans lequel l'entité demanderesse de surveillance de localisation est configurée pour recevoir une confirmation de surveillance et, si la fonctionnalité de positionnement de la fonction de gestion de localisation ou du serveur de gestion de localisation détecte des équipements utilisateur entrant dans l'emplacement spécifique ou la zone géographique spécifique, pour recevoir de la fonction de gestion de localisation ou du serveur de gestion de localisation un message d'événement de surveillance de localisation incluant de tels identifiants d'équipement utilisateur avec les informations de localisation correspondantes, et dans lequel, lors de la détection d'un objet ou d'un être vivant détecté à l'emplacement spécifique ou dans la zone géographique spécifique, l'entité demanderesse de surveillance de localisation est configurée pour faire correspondre l'emplacement de l'objet ou l'emplacement de l'être vivant obtenu à partir de la fonction de détection (SF) avec les informations de localisation d'équipements utilisateur reçues et pour transmettre, en tant que message d'événement de surveillance de détection, des informations sur l'objet ou l'être vivant conjointement avec les identifiants d'équipement utilisateur pour lesquels une correspondance a été déterminée.

8. Programme comprenant un code de programme lisible par ordinateur qui, lorsqu'il est exécuté par un ou plusieurs processeurs du réseau de communication mobile (100) selon la revendication 7, amène le réseau de communication mobile (100) à exécuter les opérations pour lesquelles il est configuré selon la revendication 7.

9. Support lisible par ordinateur stockant un programme selon la revendication 8.
